# FASCICULE DE BREVET EUROPEEN

(11) **EP 3 887 125 B1**
(45) Date de publication et mention de la délivrance du brevet: **26.02.2025**
(21) Numéro de dépôt: 19835242.9
(22) Date de dépôt: 28.11.2019
(51) Int. Cl.: B29C 49/20, B60K 15/03, B29C 49/04

(54) **RENFORT INTERNE POUR RESERVOIR DE VEHICULE AUTOMOBILE**
INNENVERSTÄRKUNG FÜR EINEN KRAFTFAHRZEUGTANK
INTERNAL REINFORCEMENT FOR A MOTOR VEHICLE TANK

(30) Priorité: 30.11.2018 FR 1872170
(43) Date de publication de la demande: 06.10.2021
(73) Titulaire: Plastic Omnium Advanced Innovation And Research, 1130 Bruxelles (BE)
(72) Inventeur: DE KEYZER, Pierre, 1130 BRUXELLES (BE); DUEZ, Laurent, 1130 BRUXELLES (BE); CRIEL, Bjorn, 1130 BRUXELLES (BE)
(74) Mandataire: LLR
(86) Numéro de dépôt international: PCT/EP2019/082898
(87) Numéro de publication internationale: WO 2020/109461

(56) Documents cités:
- DE-A1- 3 040 791
- KR-B1- 101 628 556
- US-A- 2 407 455
- US-A1- 2014 158 696
- US-A1- 2018 029 466
- US-B1- 6 220 779

## Description

L'invention concerne un renfort interne pour réservoir de véhicule automobile ainsi qu'un procédé de fabrication d'un tel renfort interne.

On connaît déjà dans l'état de la technique, notamment d'après le document US9027781, un renfort interne permettant de connecter la paroi supérieure et la paroi inférieure d'un réservoir, ce renfort interne étant réalisé par moulage par injection d'une matière plastique. Un tel renfort interne requiert une certaine forme, tout particulièrement des extrémités plus larges pour assurer la connexion avec les parois du réservoir, et une partie centrale de section réduite pour réaliser un point de rupture du renfort interne en cas de choc, et éviter ainsi une rupture des parois du réservoir. Une telle forme peut être relativement complexe. Il se trouve que, dès que l'on souhaite modifier une forme, une hauteur ou encore une épaisseur du renfort, on doit modifier le moule d'injection.

On connaît également du document US2018/0029466 un réservoir de carburant présentant un support en forme de colonne connecté aux parois des parties supérieure et inférieure du réservoir. Le support présente des points de rupture, afin qu'il puisse rompre en cas de choc, préservant ainsi le réservoir. Le support comprend des segments qui se complètent pour former la section du support à une de ses extrémités, et les segments peuvent être fabriqués par injection, par extrusion ou par frittage.

Outre le moulage par injection, le spécialiste de la fabrication des réservoirs en plastique connaît le moulage par extrusion-soufflage. Des renforts internes pour planches de surf sont d'ailleurs également fabriqués par moulage par extrusion-soufflage, comme décrit dans le document DE3040791. Un renfort interne réalisé par moulage par extrusion-soufflage d'une matière plastique souffrirait des mêmes inconvénients qu'un renfort réalisé par moulage par injection, à savoir, la nécessité de modifier le moule de soufflage dès que l'on souhaite modifier la géométrie du renfort interne.

On connaît aussi du document US6220779 un réservoir sous pression pour le stockage de propane liquide, comprenant des parois arquées extérieures et des segments de connexion internes. On connaît aussi du document US2407455 un réservoir pour le stockage de carburant dans un avion, dans lequel le carburant est stocké dans une enveloppe flexible. Pour empêcher l'enveloppe de s'effondrer lorsqu'elle est vide ou remplie uniquement en partie, le réservoir comprend des supports en matériau flexible, qui sont insérés entre des portions opposées de l'enveloppe.

L'invention a notamment pour but de proposer un procédé de fabrication plus simple et moins coûteux.

A cet effet l'invention a pour objet un procédé de fabrication d'un renfort interne pour réservoir de véhicule automobile, le renfort interne étant configuré pour connecter une paroi supérieure et une paroi inférieure du réservoir. Le procédé de fabrication comprend une étape d'extrusion de matière, dite matière extrudée, formant une partie dite extrudée du renfort interne.

Ainsi, on propose d'utiliser l'extrusion à la place de l'injection ou de l'extrusion-soufflage, bien que cela puisse paraître dissuasif d'envisager l'extrusion pour un tel renfort interne, susceptible d'avoir une section variable pour assurer les fonctions de ce renfort, notamment la fonction d'assemblage avec les parois du réservoir et éventuellement la création d'un point de rupture du renfort en cas de choc.

On comprend que la méthode proposée est plus intéressante que les méthodes connues d'injection et d'extrusion-soufflage présentées précédemment, du fait que l'on peut faire facilement varier une direction de la partie extrudée sans avoir besoin de réaliser un moule différent, ni même un moule. De façon générale, cette méthode est plus intéressante que toute méthode utilisant un moule. C'est également une méthode plus intéressante que le laminage tel que mentionné dans le document WO2018/115523, du fait que le laminage ne permet de réaliser que des objets sensiblement plans, à la différence de l'extrusion. Par ailleurs, les objets issus du laminage sont généralement multicouches, par exemple des couches de bois et plastique pour du revêtement de sol, ou de verre et plastique pour un pare-brise. L'extrusion permet la fabrication de formes complexes, monocouche ou multicouches. On entend par paroi supérieure du réservoir la paroi du réservoir destinée à former la paroi supérieure de celui-ci lorsqu'il est dans la position d'utilisation prévue par le fabricant après assemblage sur le véhicule. De même, on entend par paroi inférieure du réservoir la paroi du réservoir destinée à former la paroi inférieure de celui-ci lorsqu'il est dans la position d'utilisation prévue par le fabricant après assemblage sur le véhicule. Enfin, on entend par « extrusion » une extrusion sans soufflage, c'est-à-dire une extrusion qui ne nécessite pas une étape ultérieure de soufflage de la matière extrudée dans un moule de soufflage pour former la partie extrudée du renfort interne. Dans l'extrusion, la dimension de la partie extrudée est déterminée par découpe.

Suivant d'autres caractéristiques optionnelles du procédé de fabrication, prises seules ou en combinaison :

Le procédé de fabrication comporte en outre une étape de découpe de la partie extrudée de manière à lui donner sa dimension.

L'étape de découpe de la partie extrudée est réalisée de sorte que la partie extrudée comporte une surface découpée, configurée de façon que, lorsque le renfort interne est en place dans le réservoir, la surface découpée de la partie extrudée se trouve dans un plan sensiblement perpendiculaire à chacune des parois supérieure et inférieure du réservoir.

De façon originale, on a l'idée d'utiliser la partie extrudée dans une orientation inattendue mais particulièrement pratique. En effet, alors que l'on pourrait s'attendre à découper la partie extrudée dans un plan qui est parallèle à chacune des parois inférieure et supérieure du réservoir une fois en place dans le réservoir, on découpe dans un plan perpendiculaire à ces parois. Il en résulte que l'on peut faire varier aisément la largeur du renfort, à la différence d'un moule d'injection ou d'un moule de soufflage, en faisant globalement des « tranches » de partie extrudée plus ou moins larges. Un tel avantage permet de pallier les difficultés qui pourraient dissuader un homme du métier d'utiliser l'extrusion pour réaliser un renfort interne, à savoir le fait que les formes permises par l'extrusion sont plus contraignantes que par l'injection ou l'extrusion-soufflage, qui donne plus de liberté dans la forme des pièces. Par ailleurs, la découpe dans le plan proposé peut permettre avantageusement d'intégrer un point de rupture dans le renfort interne.

La partie extrudée présente une forme allongée dans une direction dite longitudinale, correspondant à la direction reliant la paroi supérieure et la paroi inférieure du réservoir lorsque le renfort interne est en place dans le réservoir et le procédé comporte une étape de découpe de la partie extrudée selon un plan parallèle à la direction longitudinale. Il s'agit ici d'une façon originale d'utiliser l'extrusion, permettant de faire varier l'épaisseur du renfort plutôt que sa longueur.

L'étape de découpe de la partie extrudée est réalisée de sorte que la partie extrudée comporte une surface découpée, configurée de façon que, lorsque le renfort interne est en place dans le réservoir, la surface découpée de la partie extrudée se trouve dans un plan sensiblement parallèle à chacune des parois supérieure et inférieure du réservoir.

L'extrusion est réalisée au moyen d'une filière d'extrusion à géométrie variable, permettant par exemple de réaliser une partie extrudée ayant une section variable.

Ainsi lorsque la partie extrudée est découpée dans un plan sensiblement parallèle aux parois supérieure et inférieure du réservoir, il est possible d'obtenir une section variable pour assurer les fonctions du renfort, notamment l'assemblage avec les parois du réservoir et éventuellement la création d'un point de rupture du renfort en cas de choc.

Lorsque le procédé comporte une étape de découpe de la partie extrudée, dite première étape de découpe, de sorte que la partie extrudée comporte une surface découpée, dite première surface découpée dans un plan, dit premier plan, le procédé comporte en outre une deuxième étape de découpe, de sorte que la partie extrudée comporte une deuxième surface découpée dans un plan, dit deuxième plan, distinct du premier plan.

Ceci permet d'obtenir des formes plus variées de renfort interne. En particulier, le premier plan peut être orthogonal au deuxième plan.

Le procédé comporte en outre une étape de réalisation d'au moins un orifice dans la partie extrudée.

L'orifice peut être un orifice de fixation de la partie extrudée, permettant par exemple un passage de matière en fusion pour permettre de fixer par ancrage mécanique fort la partie extrudée sur une paroi du réservoir ou sur un composant intermédiaire entre l'élément extrudé et la paroi du réservoir, ou encore pour l'assembler avec une autre partie extrudée. L'orifice de fixation peut également permettre le passage d'une vis ou d'un rivet. De façon alternative, l'orifice peut être un orifice d'affaiblissement local de la partie extrudée pour former un point de rupture du renfort interne en cas de choc. En combinaison ou de façon alternative, l'orifice peut être un orifice de stockage de carburant et/ou de passage de carburant à travers le renfort interne.

Le procédé comporte en outre une étape de surmoulage de la partie extrudée, en particulier par injection, par exemple une étape de surmoulage de polyéthylène haute densité.

Le surmoulage peut être réalisé pour fabriquer un composant intermédiaire permettant de fixer la partie extrudée sur une paroi du réservoir ou encore pour l'assembler avec une autre partie extrudée.

Avantageusement, le surmoulage est réalisé sur des portions de la partie extrudée dans lesquelles des orifices ont été réalisés, afin que la matière en fusion remplisse les orifices lors de l'injection, de manière à obtenir un ancrage mécanique. La température de surmoulage est inférieure à la température de fusion de la matière extrudée de la partie extrudée.

Le renfort interne comporte deux parties extrudées et le procédé comprend une étape d'assemblage des deux parties extrudées entre elles.

Ceci permet de faire facilement varier la hauteur du renfort interne, avantageusement à partir d'une même filière d'extrusion, en particulier dans le cas d'une découpe perpendiculaire aux parois du réservoir. Dans le cas d'une découpe parallèle aux parois inférieure et supérieure, on notera qu'il est possible d'ajuster la position de la découpe pour faire varier la hauteur du renfort interne.

Au moins une des deux parties extrudées comporte plusieurs moyens d'assemblage avec l'autre partie extrudée, répartis dans la direction longitudinale du renfort interne de façon à pouvoir faire varier la dimension longitudinale du renfort interne, la direction longitudinale correspondant à la direction reliant la paroi supérieure et la paroi inférieure du réservoir lorsque le renfort interne est en place dans le réservoir. Ici encore, on propose une façon simple de faire varier la forme d'un renfort interne tout en utilisant une même tête d'extrusion, par un assemblage réglable de deux ou plus parties extrudées.

Le procédé comporte en outre une étape d'assemblage de la partie extrudée avec une matrice polymère munie de fibres de renfort, par exemple par surmoulage ou par soudure. Ainsi, la matrice polymère chargée de fibres apporte un renforcement local de la partie extrudée, de sorte qu'une partie périphérique dépourvue de cette matrice polymère peut être une zone de fragilité assimilable à une zone de rupture.

La partie extrudée est réalisée dans un matériau présentant :
- une résistance au fluage caractérisée par un allongement inférieur à 1 %, mesurée à 23°C dans l'air sous une contrainte constante de 35 MPa selon la norme ISO 899-1 de 2017, et
- un gonflement inférieur à 0,5 % en longueur après 4 semaines d'immersion dans un carburant à 50°C et sous pression atmosphérique.

Le carburant utilisé est le E10 (contenant 10% d'éthanol) et/ou le E22 (contenant 22% d'éthanol) et/ou le M15 (contenant 15% de méthanol). Le gonflement du matériau est mesuré sur des éprouvettes fabriquées selon la norme ISO527-1A de 2012 et préparées par injection.

La partie extrudée est réalisée dans une matière dont la composition comprend :
- au moins 70 % en masse totale de la composition d'un polymère ou copolymère choisi dans le groupe constitué par du polyphtalamide (PPA), du polyoxyméthylène (POM), de la polycétone (PK), du polybutylène téréphtalate (PBT), de la polyétheréthercétone (PEEK), le polyethylene haute densité (PEHD)
- et de préférence entre 15 et 30 % en masse totale de la composition d'une matière de charge choisie dans le groupe constitué par des fibres naturelles ou synthétiques, telles que des fibres de verre, de polyéthylène téréphtalate ou de polyamide.

Les fibres sont choisies préférentiellement dans un matériau compatible avec ledit polymère, c'est-à-dire apte à adhérer au polymère. A cet effet, elles peuvent être dimensionnées, c'est à dire subir un traitement de surface, par exemple par un silane ou un composé dérivé d'anhydride maléique.

La partie extrudée est réalisée en PEHD (polyéthylène haute densité) chargé de fibres (préférentiellement des fibres de verre), le taux de fibres étant préférentiellement supérieur ou égal à 5 % en masse totale de la composition.

Les inventeurs ont montré qu'il n'y a pas d'effet significatif à un taux inférieur à 5 %.

La partie extrudée est réalisée en PEHD chargé de fibres (préférentiellement des fibres de verre), le taux de fibres étant préférentiellement inférieur ou égal à 75 % en masse totale de la composition.

Les inventeurs ont montré que l'extrusion est difficile à un taux supérieur à 75 %.

La matière extrudée comprend deux matériaux qui sont co-extrudés lors de l'étape d'extrusion.

Il est ainsi envisageable d'obtenir par exemple un renfort interne comprenant une partie centrale dans un premier matériau, par exemple un premier matériau polymère, et des extrémités dans un second matériau, par exemple un second matériau polymère, compatible chimiquement avec le premier matériau et le matériau des parois du réservoir pour faciliter la fixation des extrémités sur les parois. On entend par un premier matériau polymère « compatible chimiquement » avec un deuxième matériau polymère le fait que les matériaux polymères comprennent chacun des espèces chimiques pouvant être soudées ensemble, sans nécessiter d'ajout de matière supplémentaire. En d'autres termes, des matériaux polymères compatibles chimiquement sont aptes à se lier intimement entre eux par fusion, et à réaliser en particulier un enchevêtrement moléculaire de chaînes polymériques entre eux. Le soudage des deux matériaux polymères est compris comme deux matériaux polymères pressés ensemble à l'état fondu de telle manière que le phénomène d'autohésion se produit. Par « enchevêtrement moléculaire de chaînes polymériques » d'un premier matériau polymère et d'un second matériau polymère, on comprend deux matériaux polymères pressés ensemble à l'état fondu de telle manière qu'un phénomène d'autohésion se produit. La température de fusion des deux matériaux polymères pressés est mesurée à l'aide de la norme ISO 3146:2000. Une telle autohésion est le phénomène décrivant la diffusion intermoléculaire et l'enchevêtrement de chaines moléculaires à travers une interface polymère formant une liaison forte. A la différence de l'adhésion, laquelle concerne l'énergie de surface (ou des liaisons chimiques secondaires entre deux matériaux soit similaires soit non similaires), l'autohésion concerne l'enchevêtrement de chaînes moléculaires et les liaisons secondaires pour des chaînes polymères de matériaux similaires. Dans des conditions idéales, la diffusion est complète lorsque l'interface entre les deux matériaux polymères n'est plus discernable de la masse de chacun des deux matériaux polymères. Par exemple, concernant deux matériaux polymères thermoplastiques, une fois que le contact polymère thermoplastique - polymère thermoplastique est obtenu à l'interface, la diffusion intermoléculaire et l'enchevêtrement est nécessaire pour terminer le processus et former une bonne soudure. Un tel phénomène d'autohésion est par exemple décrit dans la publication « Plastics and Composites Welding Handbook », ISBN 1-56990-313-1, page 23. L'état fondu des deux matériaux polymères peut être obtenu notamment par friction, vibration, rotation, irradiation des deux matériaux polymères ou par un élément chauffant les deux matériaux polymères avec ou sans contact. Il peut également être envisagé qu'un premier matériau, par exemple un polymère, soit co-extrudé avec un réseau interne d'une matière de charge, par exemple des fibres de renfort, ou avec une bande externe d'une matière de charge.

La coextrusion peut être réalisée sur une structure support, par exemple un profilé métallique creux, ce qui permet d'obtenir un renfort comprenant un cœur métallique creux, recouvert par les matériaux co-extrudés.

L'invention a également pour objet un renfort interne pour réservoir de véhicule automobile, notamment un renfort interne en plastique, par exemple, en matériau polymère. Celui-ci est obtenu par un procédé tel que décrit ci-avant.

Dans un premier mode de réalisation, on comprend qu'un tel renfort est avantageusement dépourvu d'un plan de joint de deux parties de moule d'injection ou de moule de soufflage, ou encore de la présence d'au moins un point d'injection ou d'une zone de soudure. Ceci est particulièrement intéressant, car le point d'injection peut être un élément non souhaité de faiblesse de la structure.

Dans un second mode de réalisation, qui se rapporte à la fixation entre elles de deux parties extrudées, on comprend que la partie extrudée d'un tel renfort est avantageusement dépourvue d'un plan de joint de deux parties de moule d'injection ou de moule de soufflage, ou encore de la présence d'au moins un point d'injection ou d'une zone de soudure.

Suivant une caractéristique optionnelle du renfort interne, celui-ci comprend une zone de rupture du renfort interne, configurée pour que le renfort interne puisse se déformer ou casser en cas de choc. La zone de rupture est choisie parmi les éléments du groupe :
- un amincissement local de la partie extrudée,
- un orifice ménagé dans la partie extrudée,
- une zone disposée entre deux zones d'assemblage de la partie extrudée, chaque zone d'assemblage étant assemblée avec une matrice polymère munie de fibres de renfort,
- des moyens d'assemblage fusible de la partie extrudée avec une autre partie extrudée du renfort interne ou avec une paroi du réservoir.

L'amincissement local de la partie extrudée peut être obtenu par une section en X ou en Y notamment.

De façon préférée, le réservoir de véhicule automobile est un réservoir à carburant. Les carburants sont préférentiellement des essences (toute essence sur le marché et en particulier E10, E22 ou M15).

De façon préférée, le réservoir de véhicule automobile est un réservoir en plastique. Le réservoir en plastique de véhicule automobile est préférentiellement obtenu par extrusion-soufflage d'un polyéthylène haute densité (PEHD).

### Brève description des figures

L'invention sera mieux comprise à la lecture de la description qui va suivre donnée uniquement à titre d'exemple et faite en se référant aux dessins annexés dans lesquels :

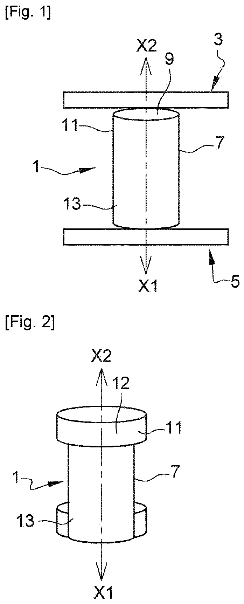

- [Fig. 1] la figure 1 est une vue schématique en perspective d'un renfort interne pour réservoir de véhicule automobile, selon un mode de réalisation de l'invention, connectant une paroi supérieure du réservoir et une paroi inférieure du réservoir, qui sont représentées partiellement.
- [Fig. 2]
- [Fig. 3]
- [Fig. 6] les figures 2, 3 et 6 sont des vues schématiques en perspective de renforts internes pour réservoir de véhicule automobile, selon d'autres modes de réalisation de l'invention.
- [Fig. 4]
   - la figure 4a est une vue schématique de face d'un renfort interne selon un mode de réalisation de l'invention.
   - la figure 4b est une vue schématique de face du même renfort interne dans lequel les parties surmoulées ne sont pas représentées.
- [Fig. 5] la figure 5c est une vue schématique de face d'une partie extrudée destinée à être assemblée avec une deuxième partie extrudée pour former par exemple les différents renforts internes selon un mode de réalisation de l'invention représentés de face sur : la figure 5b et figure 5a.
- [Fig. 7] la figure 7a est une vue schématique de face d'une partie extrudée formant un renfort interne selon un mode de réalisation de l'invention ou destinée à être assemblée avec une deuxième partie extrudée pour former par exemple le renfort interne selon un mode de réalisation de l'invention représenté de face sur la figure 7b.
- [Fig. 8] la figure 8 est une vue schématique en coupe longitudinale d'une filière d'extrusion pour la fabrication de parties extrudées de renforts internes selon un autre mode de réalisation de l'invention.
- [Fig. 9] la figure 9 est une représentation schématique partielle, vue en coupe longitudinale, d'une filière d'extrusion pour la fabrication de parties extrudées de renforts internes selon un autre mode de réalisation de l'invention.

### Description détaillée

On a représenté sur la figure 1 un renfort interne de réservoir de véhicule automobile selon un mode de réalisation de l'invention, désigné par la référence 1. Le renfort interne 1 connecte les parois supérieure et inférieure d'un réservoir de véhicule automobile. Seule une portion 3 de la paroi supérieure et une portion 5 de la paroi inférieure sont représentées. Le renfort interne 1 est fabriqué par un procédé comprenant une étape d'extrusion de matière, dite matière extrudée, formant une partie extrudée 7. Le renfort interne 1 présente une forme allongée dans une direction longitudinale représentée par l'axe X1-X2. La direction longitudinale est la direction reliant la paroi supérieure 3 et la paroi inférieure 5 du réservoir lorsque le renfort interne 1 est en place dans le réservoir.

Dans toutes les figures représentant un renfort interne 1, l'axe X1-X2 représente la direction longitudinale, qui relie la paroi supérieure 3 et la paroi inférieure 5 du réservoir lorsque le renfort interne 1 est en place dans le réservoir.

Dans les modes de réalisation des figures 1 et 2, la partie extrudée 7 a été découpée de sorte que la partie extrudée 7 comporte une surface découpée 9, non visible en figure 2, qui, lorsque le renfort interne 7 est en place dans le réservoir, se trouve dans un plan sensiblement parallèle à chacune des parois supérieure 3 et inférieure 5 du réservoir. La surface découpée 9 est localisée dans une extrémité longitudinale 11 du renfort interne 1. L'autre extrémité longitudinale du renfort interne est désignée par la référence 13.

En outre dans le mode de réalisation de la figure 2, les extrémités longitudinales 11 et 13 du renfort interne 1 sont surmoulées par un matériau compatible avec le matériau de la partie extrudée 7 et le matériau des parois 3 et 5 du réservoir. Dans ce mode de réalisation, le surmoulage 12 est utilisé pour fixer la partie extrudée à la paroi du réservoir 3 ou 5. Le matériau surmoulé peut être du polyéthylène haute densité (HDPE).

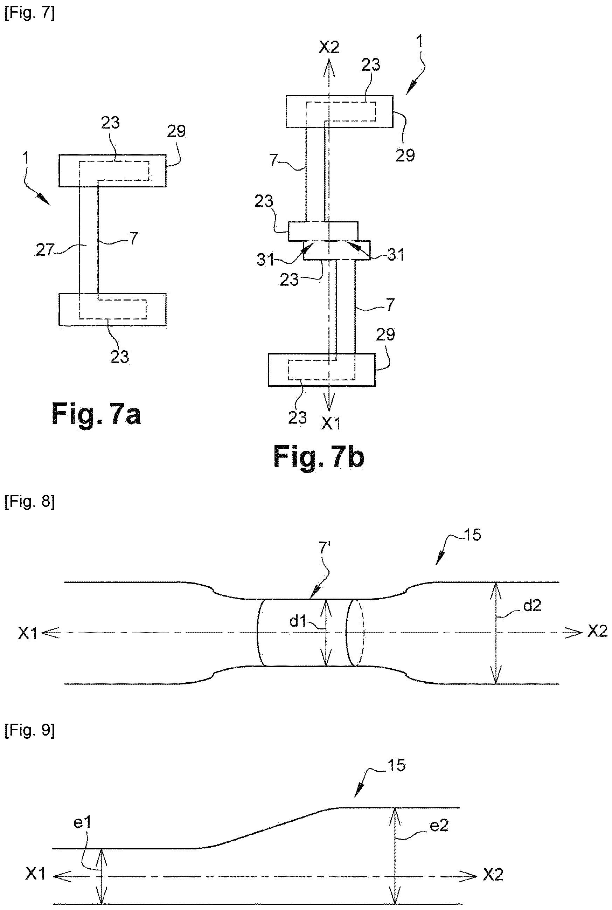

La figure 8 présente une filière d'extrusion à géométrie variable. La figure 8 présente de plus de la matière extrudée 7', destinée à former une partie extrudée d'un renfort interne selon ce mode de réalisation de l'invention. L'axe X1-X2 représente la direction longitudinale, qui reliera la paroi supérieure 3 et la paroi inférieure 5 du réservoir lorsque le renfort interne issu de la matière extrudée 7' sera en place dans le réservoir. La filière 15 de la figure 8 présente un diamètre interne qui varie entre d1 et d2. Ceci permet de réaliser une partie extrudée 7 ayant une section variable. Ainsi, comme la partie extrudée 7 est découpée dans un plan sensiblement parallèle aux parois supérieure 3 et inférieure 5 du réservoir, comme dans les modes de réalisation des figures 1 et 2, il est possible d'obtenir une section variable pour assurer les fonctions du renfort, notamment l'assemblage avec les parois du réservoir et éventuellement la création d'un point de rupture du renfort en cas de choc.

La figure 9 représente partiellement une filière d'extrusion. L'axe X1-X2 représente la direction longitudinale, qui reliera la paroi supérieure 3 et la paroi inférieure 5 du réservoir lorsque le renfort interne issu de la matière extrudée, non représentée, sera en place dans le réservoir. La partie de filière représentée en figure 9 est par exemple un bras d'une filière dont la section a la forme d'un C, comme la filière utilisée pour former la partie extrudée représentée en figure 7a. Comme représenté en figure 9, dans ce mode de réalisation, le diamètre interne du bras représenté varie entre e1 et e2 ce qui permet d'obtenir une partie extrudée dont la section a la forme d'un C, et dont par exemple chacun des bras présente une épaisseur variable. Il est ainsi possible d'obtenir un renfort présentant une section variable pour assurer les fonctions du renfort, notamment l'assemblage avec les parois du réservoir et éventuellement la création d'un point de rupture du renfort en cas de choc.

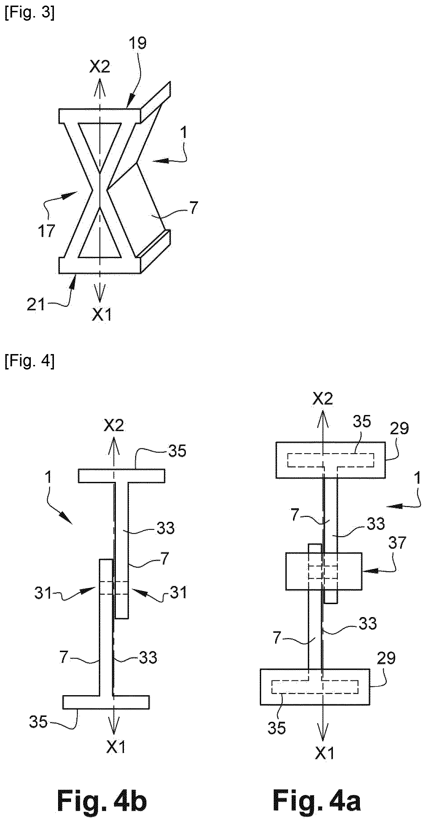

Les renforts internes 1 des modes de réalisation des figures 3, 4a, 4b, 5a, 5b, 6, 7a et 7b comprennent une partie extrudée 7 qui a subi une découpe selon un plan parallèle à la direction longitudinale représentée par l'axe X1-X2. Dans ces modes de réalisation également, la surface découpée est configurée de façon que, lorsque le renfort interne est en place dans le réservoir, la surface découpée de la partie extrudée se trouve dans un plan sensiblement perpendiculaire à chacune des parois supérieure et inférieure du réservoir.

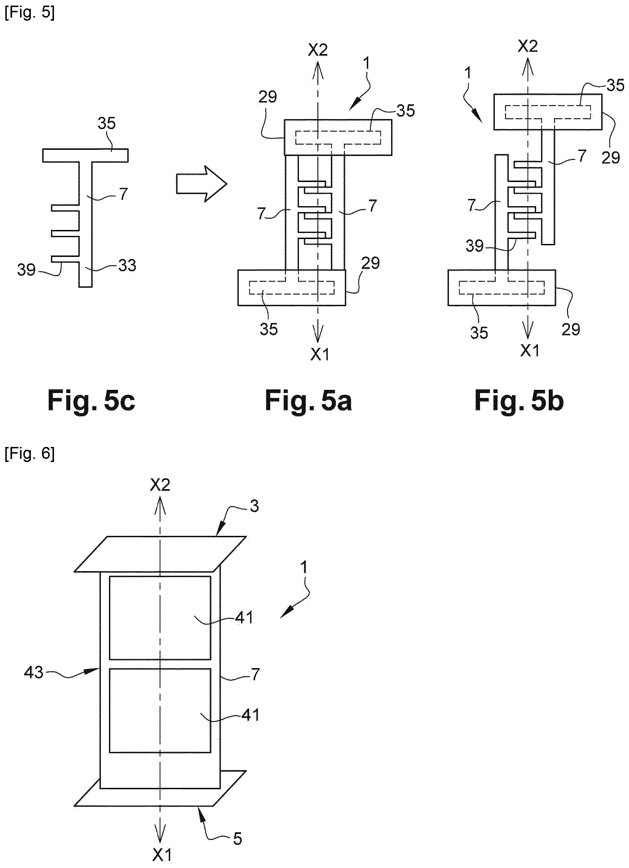

Les filières utilisées pour obtenir les parties extrudées de ces modes de réalisation ont une section de forme particulière, ce qui permet d'obtenir une partie extrudée dont la section a une forme particulière complémentaire avec la section de la filière, en d'autres termes la forme de la section des parties extrudée est dictée par la forme de la section des filières. On obtient ainsi une section en X (figure 3), en T (figures 4a et 4b), en T avec des branches latérales (figures 5a et 5b), en I (figure 6) ou en C (figure 7b), ou en H.

L'utilisation d'une filière avec section en X permet avantageusement d'obtenir un renfort interne 1 avec amincissement local 17 comme représenté en figure 3. L'amincissement local 17 constitue une zone de rupture qui permet au renfort interne de se déformer ou de casser en cas de choc, évitant ainsi une rupture des parois du réservoir. Dans ce mode de réalisation, la forme en X est terminée aux deux extrémités par une barre 19, 21. Ceci permet d'obtenir une forme avec des extrémités 19, 21 plus larges pour assurer la connexion avec les parois du réservoir.

Le renfort interne 1 de la figure 7a a une section en forme de C qui comprend deux bras 23 séparés par une partie centrale 27. Les bras 23 forment des extrémités plus larges et la partie centrale 27 présente une section réduite, ou amincissement local. Du surmoulage 29 est utilisé pour fixer les extrémités 23 aux parois inférieure et supérieure du réservoir. Le matériau surmoulé peut être du polyéthylène haute densité (HDPE).

Le renfort interne 1 du mode de réalisation de la figure 7b comporte deux parties extrudées 7 ayant une section en forme de C. Les deux parties extrudées 7 sont assemblées entre elles grâce à deux orifices 31 réalisés chacun dans un bras 23 de chaque partie extrudée 7. Les orifices 31 autorisent la fixation des parties extrudées 7 entre elles, permettant par exemple un passage de matière en fusion, non représentée, pour obtenir une fixation par ancrage mécanique fort. L'orifice de fixation 31 peut également permettre le passage d'une vis ou d'un rivet, non représentés. Ceci permet de faire facilement varier la hauteur du renfort interne, avantageusement à partir d'une même filière d'extrusion. Par ailleurs, les moyens d'assemblage (31) des deux parties extrudées (7) entre elles peuvent constituer une zone de rupture du renfort interne 1.

De façon similaire, deux parties extrudées 7 à section en forme de T sont représentées assemblées entre elles dans les figures 4a et 4b. La forme en T comprend une tige 33 parallèle à la direction longitudinale X1-X2 et une tête rectangulaire 35 perpendiculaire à la direction longitudinale X1-X2 et parallèle à chacune des parois supérieure et inférieure du réservoir. Un orifice 31 est réalisé dans chacune des tiges 33 pour permettre l'assemblage entre celles-ci. Un surmoulage 37 est réalisé au niveau des orifices de manière à obtenir un ancrage mécanique en remplissant l'orifice 31 par la matière en fusion 37. En fonction de la hauteur à laquelle est réalisé l'orifice, on fera facilement varier la hauteur du renfort interne.

La figure 5c représente une partie extrudée 7 présentant une section en forme de T avec des branches latérales 39. Pour l'assemblage des deux parties 7, représenté en figures 5a et 5b, au moins une branche latérale 39 d'une des parties extrudées 7 est mise en butée avec au moins une branche latérale 39 de l'autre partie extrudée 7. Chaque branche latérale 39 constitue ainsi un moyen d'assemblage avec l'autre partie extrudée et chaque partie extrudée 7 comporte plusieurs moyens d'assemblage avec l'autre partie extrudée 7, répartis dans la direction longitudinale du renfort interne 1. Ainsi, on peut faire varier la dimension longitudinale du renfort interne 1.

La figure 6 représente une partie extrudée 7 dont la section a une forme en I. Deux feuilles 41 de matrice polymère munie de fibres de renfort sont assemblées sur la partie extrudée 7 au niveau de deux zones d'assemblage distinctes. La zone 43 disposée entre les deux zones d'assemblage de la partie extrudée 7 constitue une zone de rupture du renfort interne 1.

## Revendications

1. Procédé de fabrication d'un renfort interne (1) pour réservoir de véhicule automobile, le renfort interne (1) étant configuré pour connecter une paroi supérieure (3) et une paroi inférieure (5) du réservoir, le dit procédé comprenant une étape d'extrusion de matière, dite matière extrudée, formant une partie dite extrudée (7) du renfort interne, le procédé de fabrication comportant en outre une étape de découpe de la partie extrudée (7) de manière à lui donner sa dimension,
le dit procédé étant **caractérisé en ce que** l'étape de découpe de la partie extrudée (7) est réalisée de sorte que la partie extrudée (7) comporte une surface découpée (9), configurée de façon que, lorsque le renfort interne (1) est en place dans le réservoir, la surface découpée (9) de la partie extrudée (7) se trouve dans un plan sensiblement parallèle à chacune des parois supérieure (3) et inférieure (5) du réservoir, et l'extrusion est réalisée au moyen d'une filière d'extrusion à géométrie variable (15), permettant par exemple de réaliser une partie extrudée (7) ayant une section variable.

2. Procédé de fabrication selon l'une quelconque des revendications précédentes, comportant en outre une étape de réalisation d'au moins un orifice (31) dans la partie extrudée (7).

3. Procédé de fabrication selon l'une quelconque des revendications précédentes, comportant en outre une étape de surmoulage de la partie extrudée (7), en particulier par injection, par exemple une étape de surmoulage de polyéthylène haute densité.

4. Procédé de fabrication selon l'une quelconque des revendications précédentes, dans lequel le renfort interne (1) comporte deux parties extrudées (7) et le procédé comprend une étape d'assemblage des deux parties extrudées (7) entre elles.

5. Procédé de fabrication selon la revendication précédente, dans lequel au moins une des deux parties extrudées (7) comporte plusieurs moyens d'assemblage (31, 39) avec l'autre partie extrudée (7), répartis dans la direction longitudinale (X1-X2) du renfort interne de façon à pouvoir faire varier la dimension longitudinale du renfort interne (1), la direction longitudinale (X1-X2) correspondant à la direction reliant la paroi supérieure (3) et la paroi inférieure (5) du réservoir lorsque le renfort interne (1) est en place dans le réservoir.

6. Procédé de fabrication selon l'une quelconque des revendications précédentes, dans lequel la matière extrudée comprend deux matériaux qui sont co-extrudés lors de l'étape d'extrusion.

## Patentansprüche

1. Verfahren zur Herstellung einer Innenverstärkung (1) für einen Kraftfahrzeugtank, wobei die Innenverstärkung (1) konfiguriert ist, eine obere Wand (3) und eine untere Wand (5) des Tanks zu verbinden, wobei das genannte Verfahren einen Schritt des Extrudierens von Material, genannt extrudiertes Material, umfasst, das einen sogenannten extrudierten Teil (7) der Innenverstärkung bildet, wobei das Herstellungsverfahren außerdem einen Schritt des Schneidens des extrudierten Teils (7) umfasst, so dass er seine Dimension erhält, wobei das genannte Verfahren **dadurch gekennzeichnet ist, dass** der Schritt des Ausschneidens des extrudierten Teils (7) so durchgeführt wird, dass der extrudierte Teil (7) eine ausgeschnittene Oberfläche (9) aufweist, die so konfiguriert ist, dass, wenn die Innenverstärkung (1) in dem Behälter angeordnet ist, die ausgeschnittene Oberfläche (9) des extrudierten Teils (7) in einer Ebene liegt, die im Wesentlichen parallel zu jeder der oberen (3) und unteren (5) Wände des Behälters ist, und das Extrudieren mittels einer Extrusionsdüse mit variabler Geometrie (15) durchgeführt wird, wodurch beispielsweise ein extrudierter Teil (7) mit einem variablen Querschnitt hergestellt werden kann.

2. Herstellungsverfahren nach einem der vorhergehenden Ansprüche, das außerdem einen Schritt zur Herstellung mindestens einer Öffnung (31) in dem extrudierten Teil (7) umfasst.

3. Herstellungsverfahren nach einem der vorhergehenden Ansprüche, das außerdem einen Schritt zum Umspritzen des extrudierten Teils (7) umfasst, insbesondere durch Spritzguss, z. B. einen Schritt zum Umspritzen mit Polyethylen hoher Dichte.

4. Herstellungsverfahren nach einem der vorhergehenden Ansprüche, bei dem die Innenverstärkung (1) zwei extrudierte Teile (7) aufweist und das Verfahren einen Schritt des Zusammenfügens der beiden extrudierten Teile (7) miteinander umfasst.

5. Herstellungsverfahren nach dem vorhergehenden Anspruch, bei dem mindestens einer der beiden extrudierten Teile (7) mehrere Verbindungsmittel (31, 39) mit dem anderen extrudierten Teil (7) aufweist, die in der Längsrichtung (X1-X2) der Innenverstärkung verteilt sind, so dass die Längsabmessung der Innenverstärkung (1) variiert werden kann, wobei die Längsrichtung (X1-X2) der Richtung entspricht, die die obere Wand (3) und die untere Wand (5) des Tanks verbindet, wenn die Innenverstärkung (1) in dem Tank angeordnet ist.

6. Herstellungsverfahren nach einem der vorhergehenden Ansprüche, wobei das extrudierte Material zwei Materialien aufweist, die während des Schritts des Extrudierens koextrudiert werden.

## Claims

1. Method for manufacturing an internal reinforcement (1) for a motor vehicle tank, the internal reinforcement (1) being designed to connect an upper wall (3) and a lower wall (5) of the tank, wherein the method comprises a step of extruding material, referred to as extruded material, so as to form a so-called extruded portion (7) of the internal reinforcement
wherein the method for manufacturing.furthercomprises a step of cutting the extruded portion (7) so as to give it its size
the method being **characterized in that** the step of cutting the extruded portion (7) is performed such that the extruded portion (7) has a cut surface (9), designed such that when the internal reinforcement (1) is in place in the tank, the cut surface (9) of the extruded portion (7) lies in a plane that is substantially parallel to each of the upper (3) and lower (5) walls of the tank, and the extrusion is carried out by means of an extrusion die (15) having a variable geometry, thus making it possible, for example, to produce an extruded portion (7) having a variable cross-section.

2. Manufacturing method according to any of the preceding claims, further comprising a step of producing at least one hole (31) in the extruded portion (7).

3. Manufacturing method according to any of the preceding claims, further comprising a step of overmolding the extruded portion (7), in particular by means of injection, for example a step of overmolding high-density polyethylene.

4. Manufacturing method according to any of the preceding claims, wherein the internal reinforcement (1) comprises two extruded portions (7) and the method comprises a step of assembling the two extruded portions (7) together.

5. Manufacturing method according to the preceding claim, wherein at least one of the two extruded portions (7) comprises a plurality of means (31, 39) for assembly with the other extruded portion (7) that are distributed in the longitudinal direction (X1-X2) of the internal reinforcement so as to be able to vary the longitudinal dimension of the internal reinforcement (1), the longitudinal direction (X1-X2) corresponding to the direction that connects the upper wall (3) and lower wall (5) of the tank when the internal reinforcement (1) is in place in the tank.

6. Manufacturing method according to any of the preceding claims, wherein the extruded material comprises two materials which are co-extruded during the extrusion step.
